# EUROPEAN PATENT APPLICATION

(11) **EP 0 909 627 A1**
(43) Date of publication of application: **21.04.1999**
(21) Application number: 98115025.3
(22) Date of filing: 10.08.1998
(51) Int. Cl.: B29C 45/54

(54) **A method of and systems for kneading and injecting a composite resin**

(30) Priority: 17.10.1997 JP 285240/97; 02.06.1998 JP 153072/98
(71) Applicant: B.H. KOGYO YUGEN KAISHA, Osaka-shi, Osaka-fu (JP)
(72) Inventor: Yamaoka, Kishihiro, Nara-shi, Nara-ken (JP)
(74) Representative: Müller-Boré & Partner Patentanwälte

(57) **Abstract**

A kneading and injecting system includes a kneader (2) and an injector (3), and is provided with a storage unit (4) for temporarily storing kneaded mixture to be fed into the injector (3), the storage unit (4) having a storage chamber (40) for storing kneaded mixture discharged from the kneader (2), a changeover device (47) for switching the destination of the kneaded mixture discharged from the kneader (2) between the storage chamber (40) and the injector (3), and a feeder (43) for feeding the kneaded mixture temporarily stored in the storage chamber (40) into the injector (3) through the changeover device (47).

## Description

This invention pertains generally to a method of and systems for kneading and injecting a composite resin and, more particularly, relates to a method of and systems for kneading and injecting a composite resin consisting essentially of a synthetic resin and a functional material added to the synthetic resin to obtain composite resin molded products featuring improved functionality.

One known example of this kind of systems is a kneading and injecting system disclosed in Japanese Examined Patent Publication No. 7-106586 for processing a composite resin employing a so-called preplasticating injecting technique, in which a material (magnetic powder) having functionality is added to a synthetic resin and a resultant mixture is kneaded and injection-molded to obtain composite resin molded products having a specified shape. In this kneading and injecting system based on the preplasticating injecting technique, the mixture of the magnetic powder and the synthetic resin is heated and kneaded by a kneader having rotary disks and fixed disks, the kneaded mixture is fed in its hot and molten state into an injector which is assembled into a single structure with the kneader, and the kneaded mixture is injected from a nozzle of the injector into a desired mold.

Since the kneader and the injector are assembled into a single structure in this type of preplasticating injecting system, it is possible to carry out kneading and injecting processes at the same time. This makes it possible to reduce the energy cost compared to a conventional method of producing composite resin molded products, in which a kneaded mixture is once cooled and granulated and, then, it is melted again by heating and subjected to an injecting process. Another advantage of the preplasticating injecting system is that it can prevent degradation of the quality of finished products because the synthetic resin is melted by heating only once and, thus, its thermal fatigue is less likely to occur.

Although the kneader of the system disclosed in Japanese Examined Patent Publication No. 7-106586 has the capability to continuously carry out heating, melting and kneading processes of a synthetic resin material, the injector performs intermittent operation, in which the injector stops to accept the incoming kneaded mixture upon receiving a specified amount of the kneaded mixture and injects the already received kneaded mixture, and repeats this stop-and-go cycles. Accordingly, the kneader is also controlled to perform its heating, melting and kneading processes in an intermittent manner to keep pace with the injector.

More specifically, the kneader halts when the injector is in a state to receive the kneaded mixture and when the injector is injecting the kneaded mixture. In this kind of intermittent operating condition, dispersing energy applied to the kneaded mixture material resulting from rotary motion decreases when the kneader shifts from a halted state to a normal running state, or from a normal running state to a halted state, compared to the normal running state. As a result, portions of higher degrees of dispersion and lower degrees of dispersion is liable to occur in the kneaded mixture material.

A consequence of this is that the portions of higher degrees of dispersion exhibit improved fluidization characteristics while the portions of lower degrees of dispersion have poor fluidization characteristics so that there will be variations in the properties of the kneaded mixture fed into the injector, eventually causing variations in the quality of products obtained by the injecting process. Thus, the aforementioned conventional kneading and injecting system based on the preplasticating injecting technique used to have a problem that it was difficult to manufacture products of uniform quality. Variations in the properties of the kneaded mixture produce such unfavorable result that the dimensional accuracy of molding decreases, making it impossible to manufacture high-precision molded products.

It is an object of the invention to provide a method of and systems for kneading and injecting a composite resin which have overcome the problems residing in the prior art.

According to an aspect of the invention, a method of kneading and injecting a composite resin, comprises the steps of: heating and kneading a mixture of a powder having functionality and a synthetic resin serving as a binder by using a kneader; feeding kneaded mixture in a molten state into an injector; and injecting kneaded mixture into a specified mold from the injector. The kneaded mixture discharged from the kneader is temporarily stored while the injector is performing an injecting operation, and the kneaded mixture discharged from the kneader and the temporarily stored kneaded mixture are joined into a single stream when feeding the kneaded mixture into the injector.

According to another aspect of the invention, a kneading and injecting system for making a composite resin molded product, comprises: a kneader for kneading the raw material including a powder having functionality and a synthetic resin serving as a binder; an injector for injecting kneaded mixture fed from the kneader into a mold; and a storage unit for temporarily storing the kneaded mixture to be fed into the injector, the storage unit including a storage chamber for storing the kneaded mixture discharged from the kneader, a changeover device for switching the destination of the kneaded mixture discharged from the kneader between the storage chamber and the injector, and a feeder for feeding the kneaded mixture temporarily stored in the storage chamber into the injector.

These and other objects, features and advantages of the invention will become more apparent upon reading the following detailed description in conjunction with the accompanying drawings.
FIG. 1 is a sectional side view of a kneading and injecting system for processing a composite resin according to an embodiment of the present invention, showing a state immediately before an injector injects a kneaded mixture;
FIG. 2 is a sectional side view of the kneading and injecting system showing a state immediately after the injector has injected the kneaded mixture;
FIG. 3 is a front view illustrating an example of a rotary disk;
FIG. 4 is a front view illustrating an example of a fixed disk;
FIG. 5 is a sectional view of principal parts of a storage unit, especially showing a state in which a storing piston has ascended to its upper position;
FIG. 6 is a sectional view of the principal parts of the storage unit, especially showing a state in which the storing piston has descended to its lower position;
FIG. 7 is a sectional view of an on-off valve according to another embodiment of the invention, in which the on-off valve is set to its open position; and
FIG. 8 is a sectional view of the on-off valve set to its closed position.

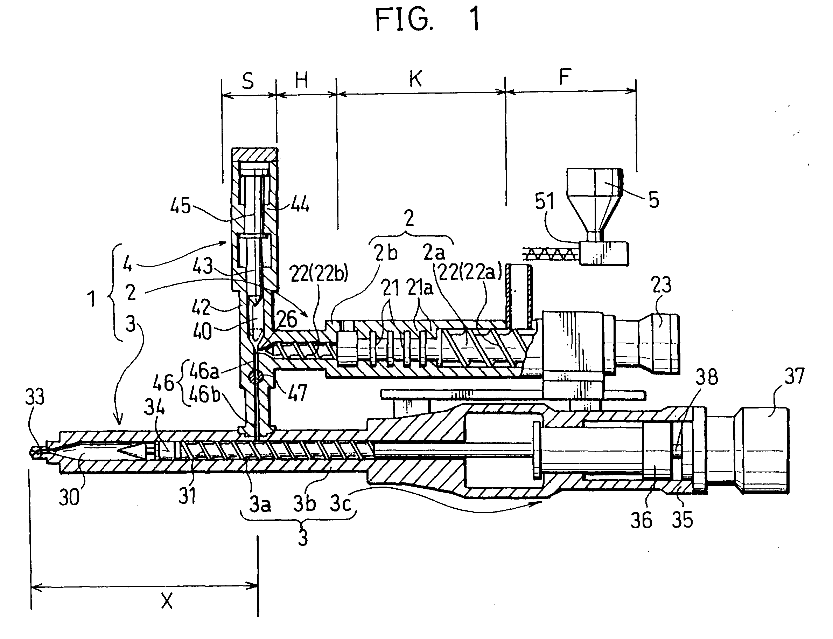

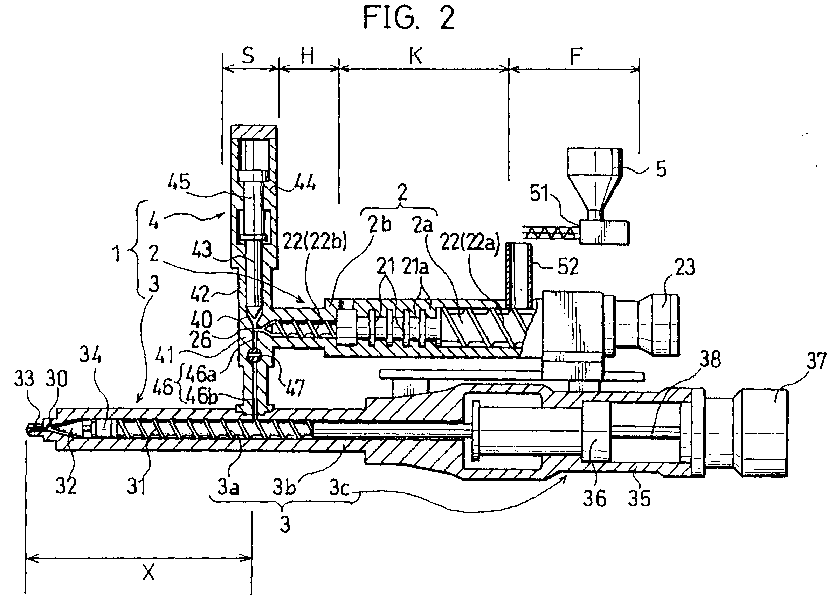

FIGS. 1 and 2 are sectional side views of a kneading and injecting system 1 for processing a composite resin according to a preferred embodiment of the present invention, in which FIG. 1 shows a state immediately before an injector 3 injects a kneaded mixture while FIG. 2 shows a state immediately after the injector 3 has injected the kneaded mixture. As shown in these Figures, the kneading and injecting system 1 comprises in its basic configuration a kneader 2 for kneading a mixture of a functional powder and a synthetic resin, the injector 3 which receives the kneaded mixture discharged from the kneader 2 at its rotary shaft portion, and a storage unit 4 for temporarily storing the kneaded mixture supplied from the kneader 2 until it is fed into the injector 3.

The aforementioned kneader 2 includes a rotary shaft 2a having on its curved outer surface screws 22, including a feed screw 22a and an extruding screw 22b, for transferring the kneaded mixture and a plurality of rotary disks 21 for kneading it, as well as a casing 2b which encases the rotary shaft 2a. The rotary disks 21 are provided in an approximately central part of the length of the rotary shaft 2a. The feed screw 22a is formed downstream of the rotary disks 21 while the extruding screw 22b is formed downstream of the rotary disks 21. Formed at a downstream end of the casing 2b is a kneaded mixture outlet 26 through which the kneaded mixture is discharged. The kneader 2 thus constructed is installed parallel to and above the injector 3 and the rotary shaft 2a of the kneader 2 is rotated by a driving motor 23 mounted at its upstream end.

Provided above the upstream end (right side in FIG. 1) of the aforementioned rotary shaft 2a is a raw material hopper 5 into which the mixture of the functional powder and the synthetic resin which has been pulverized is loaded, and a raw material feeder 51 including a driving motor and a screw conveyor is provided below the raw material hopper 5. The raw material hopper 5, the raw material feeder 51, a raw material chute 52 and the feed screw 22a together form a raw material feeding section F.

While the multiple rotary disks 21 are aligned on a common axis around the curved outer surface of the rotary shaft 2a on the downstream side (left side in FIG. 1) of the feed screw 22a, there are formed fixed disks 21a protruding in an annular form from a curved inner surface of the casing 2b toward the axis of the rotary shaft 2a in such a way that the rotary disks 21 fit into spaces between the successive fixed disks 21a.

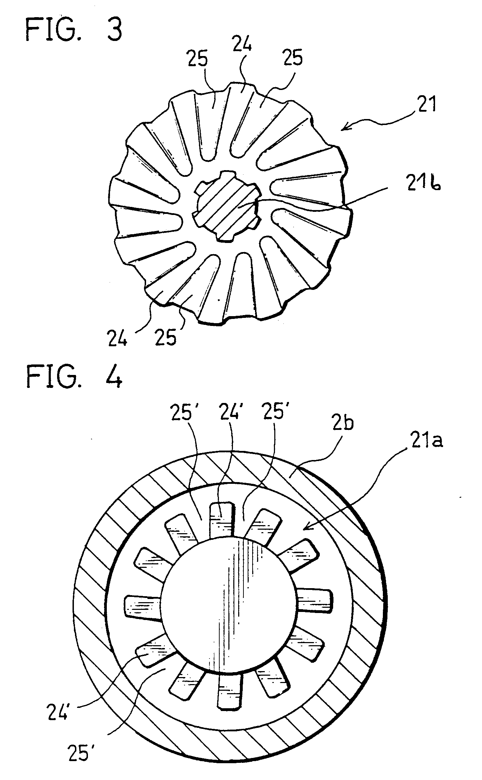

FIG. 3 is a front view illustrating an example of the rotary disks 21 and FIG. 4 is a front view illustrating an example of the fixed disks 21a. There are formed a plurality of grooves 25 on both sides of each rotary disk 21 radially extending from its central part toward its circumference as well as ridges 24 between the individual grooves 25 as shown in FIG. 3.

On the other hand, there are formed the same numbers of ridges 25' and grooves 24' on both sides of each fixed disk 21a so as to face the grooves 25 and the ridges 24 of each rotary disk 21 as shown in FIG. 4. The numbers of the grooves 25 and the ridges 24 of each rotary disk 21 and the numbers of the ridges 25' and grooves 24' of each fixed disk 21a become smaller toward the upstream side, or become larger toward the downstream side. In this configuration, the kneaded mixture receives greater shearing effects as it is transferred downstream.

The rotary shaft 2a having the two screws 22 is inserted into the central part of each successive rotary disk 21. There are formed splines on the rotary shaft 2a, whereby the individual rotary disks 21 rotate together with the screws 22. Formed in a central part of each successive rotary disk 21 is a through hole 21b in which the rotary shaft 2a is inserted. A kneading section K is formed around the rotary shaft 2a of the kneader 2 with the above-described arrangement of the rotary disks 21 and the fixed disks 21a.

Formed on the downstream side of the kneading section K is a kneaded mixture output section H in which the extruding screw 22b is formed on the rotary shaft 2a. A storage section S comprising the storage unit 4 is connected to a downstream end of the kneaded mixture output section H, and the kneaded mixture obtained by the kneading section K of the kneader 2 is supplied from the storage section S to the injector 3 which is located below the kneader 2.

The aforementioned injector 3 comprises a rotary shaft 3a arranged to extend in a horizontal direction, a driving mechanism 3c which drives the rotary shaft 3a to make it rotate about its own axis and move forward and backward in the horizontal direction, as well as a casing 3b which encases the rotary shaft 3a and the driving mechanism 3c. The rotary shaft 3a has an injecting screw 31 formed on approximately the left half of a curved outer surface of the rotary shaft 3a. A lower end of the storage section S is connected to a part of the casing 3b where the injecting screw 31 exists. With this arrangement, the kneaded mixture fed from the kneader 2 is guided by the injecting screw 31 rotating about the axis of the rotary shaft 3a and transferred toward a forward end (left side in FIGS. 1 and 2) of the casing 3b. A cavity created between a curved inner surface of the casing 3b and that part of the curved outer surface of the rotary shaft 3a where the injecting screw 31 is provided serves as a measuring section X.

A conical portion 32 having a pointed tip is formed at a forward end of the rotary shaft 3a and an injection nozzle 33 is provided at the forward end of the casing 3b just in front of the conical portion 32. There is provided a nonreturn valve 34 slightly upstream of the conical portion 32, whereby the kneaded mixture transferred to the left side of the conical portion 32 is fed through the injection nozzle 33 without flowing back to the upstream side.

The aforementioned driving mechanism 3c comprises a hydraulic cylinder 35 formed in a rear part (right side in FIGS. 1 and 2) of the casing 3b, an injecting piston 36 which moves forward and backward in the hydraulic cylinder 35 and a hydraulic motor 37 provided at a right end of the hydraulic cylinder 35.

A left end of the injecting piston 36 is connected to the rotary shaft 3a in such a way that the injecting piston 36 does not move back and forth relative to the rotary shaft 3a but can rotate relative to the rotary shaft 3a about its axis. The aforementioned hydraulic motor 37 is associated with a driving shaft 38 and is attached to the hydraulic cylinder 35. A forward end portion of the driving shaft 38 is inserted into the injecting piston 36. The driving shaft 38 can move back and forth relative to the rotary shaft 3a and rotate together with the rotary shaft 3a about its axis. With this arrangement, the rotary shaft 3a can rotate about its own axis when driven by the driving shaft 38 which is driven by the hydraulic motor 37. As a consequence, the kneaded mixture fed from the storage section S is transferred downstream by a driving force produced by the injecting screw 31.

As the kneaded mixture is fed into the casing 3b with an on-off valve 47 opened when the injecting piston 36 has moved to its leftmost position as shown in FIG. 2, the kneaded mixture fed from the storage section S is transferred downstream along the surface of the rotary shaft 3a by the driving force produced by the injecting screw 31 formed on the rotary shaft 3a which is driven to rotate by the hydraulic motor 37. As the kneaded mixture is gradually charged into a measuring space 30 downstream of the conical portion 32 within the casing 3b, the charged kneaded mixture produces a pressure which causes the injecting piston 36 to move backward as shown in FIG. 1. After the measuring space 30 has been fully charged with the kneaded mixture, the hydraulic cylinder 35 drives the injecting piston 36 causing it to move forward. As a result, the kneaded mixture in the measuring space 30 is pushed forward by the conical portion 32 with the nonreturn valve 34 closed so that the kneaded mixture is fed through the injection nozzle 33 without flowing back to the upstream side. The volumetric capacity of the measuring space 30 is set by adjusting the backward moving distance of the rotary shaft 3a.

The storage unit 4 comprises a cylindrical connecting tube 41 installed in an upright position at an upstream end of the measuring section X of the casing 3b of the injector 3, a storing cylinder 42 extending upward from an upper end of the connecting tube 41, a storing piston 43 slidably fitted inside the storing cylinder 42, a second hydraulic cylinder 44 extending upward from an upper end of the storing piston 43, and a piston 45 which is driven to move up and down by the second hydraulic cylinder 44.

Since the upper end of the storing piston 43 is integrally connected to a lower end of the piston 45, the storing piston 43 moves up and down as a result of upward and downward movements of the piston 45. While the second hydraulic cylinder 44 can drive the piston 45 downward, an hydraulic system is so constructed as to allow the piston 45 to freely move upward.

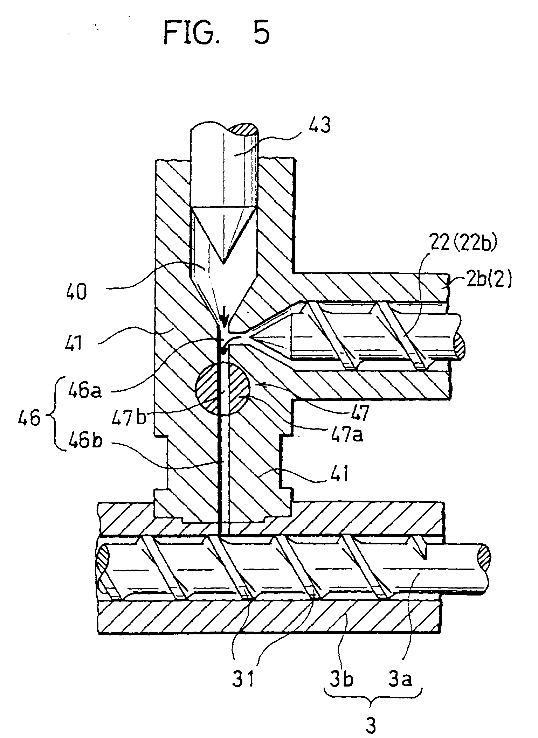

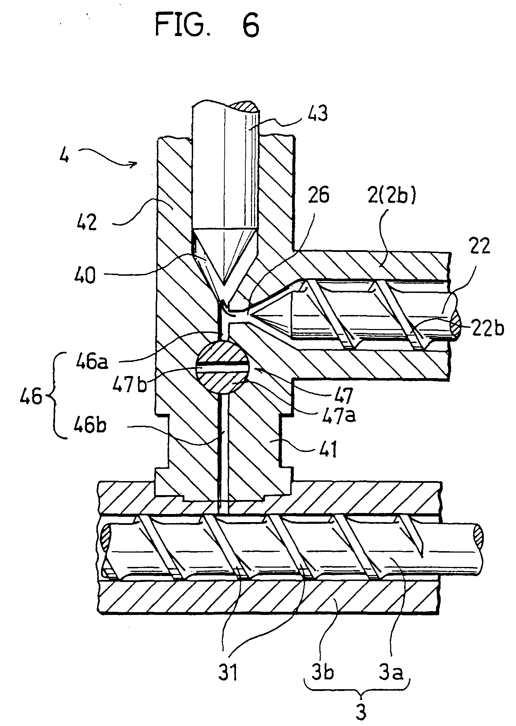

FIGS. 5 and 6 are sectional views of principal parts of the storage unit 4, wherein FIG. 5 shows a state in which the storing piston 43 has ascended to its upper position while FIG. 6 shows a state in which the storing piston 43 has descended to its lower position. As shown in these Figures, there is made a resin passage (resin feeding passage) 46 formed of an upper channel 46a and a lower channel 46b along the axis of the connecting tube 41 for conducting the kneaded mixture fed from the kneader 2 to the injector 3. The earlier-mentioned on-off valve 47 is provided between the upper channel 46a and the lower channel 46b. An upper end of the upper channel 46a is connected to a storage chamber 40 created within the storing cylinder 42 while a lower end of the lower channel 46b is connected to the measuring section X of the injector 3. A unique connecting channel of this invention is formed between the kneaded mixture outlet 26 and the storage chamber 40 located above the upper channel 46a.

The on-off valve 47 employed in this embodiment is of a rotary type provided with a cylindrical rotary valve element 47a. A kneaded mixture passageway 47b for connecting the upper channel 46a to the lower channel 46b is formed in the rotary valve element 47a passing through its center. Specifically, the upper channel 46a and the lower channel 46b are connected when the kneaded mixture passageway 47b is aligned with both the upper channel 46a and the lower channel 46b as a result of rotary motion of the rotary valve element 47a.

When the extruding screw 22b is rotated with the on-off valve 47 set in its closed position, or with the kneaded mixture passageway 47b not in alignment with the upper channel 46a and the lower channel 46b, as shown in FIG. 6, the kneaded mixture fed from the kneader 2 through its kneaded mixture outlet 26 is transferred upward through the upper channel 46a as shown by an arrow in FIG. 6 and introduced into the storage chamber 40 of the storing cylinder 42. As a result, the internal pressure of the storage chamber 40 increases. This causes the storing piston 43 to move upward, allowing-a specified amount of the kneaded mixture to be stored within the storage chamber 40. When the specified amount of the kneaded mixture has been introduced into the storage chamber 40, the on-off valve 47 opens and the second hydraulic cylinder 44 is actuated to have the storing piston 43 descend. Consequently, the kneaded mixture forced out of the storage chamber 40 and the same fed from the kneader 2 join into a single stream within the upper channel 46a as shown by arrows in FIG. 5, and the stream of the kneaded mixture is introduced into the injector 3 through the on-off valve 47 and the lower channel 46b.

Electric heaters (not shown) are mounted around a curved outer surface of the casing 2b of the kneader 2 and that of the casing 3b of the injector 3. These electric heaters are so controlled as to heat the mixture fed into the kneader 2 and the kneaded mixture fed into the injector 3 to specified temperatures.

In injecting a composite resin by using the kneading and injecting system 1 thus constructed, the kneader 2, the injector 3 and the storage unit 4 are preheated to specified temperatures by operating their respective electric heaters and a temperature controller. The electric heaters can be controlled to heat the raw material feeding section F, the kneading section K, the kneaded mixture output section H and the measuring section X to different temperatures. Thus, the electric heaters are preset to heat the individual sections to their optimum temperatures.

Subsequently, a functional powder and a synthetic resin which has been crushed to a specified grain size are mixed in specified proportions and a resultant mixture is loaded into the raw material hopper 5 as a raw material.

When the raw material feeder 51 is run with the driving motor 23 readily activated, the raw material in the raw material hopper 5 is supplied to the raw material feeding section F of the kneader 2 through the raw material chute 52. The mixed raw material supplied onto the surface of the rotary shaft 2a in the raw material feeding section F is transferred downstream by the feed screw 22a and gradually fed into the kneading section K.

The mixed raw material fed into the kneading section K passes through gaps formed between the rotary disks 21 and the fixed disks 21a provided in this section K and is fully kneaded by compressing and shearing forces created by relative movements of the ridges 24 and the grooves 25 of the rotary disks 21 and the ridges 25' and the grooves 24' of the fixed disks 21a shown in FIGS. 3 and 4. The kneaded mixture thus produced is transferred downstream into the kneaded mixture output section H.

The kneaded mixture fed into the kneaded mixture output section H is then discharged into the resin passage 46 provided in the storage section S through the kneaded mixture outlet 26 at the downstream end of the casing 2b of the kneaded mixture output section H.

While the kneader 2 is operated in a steady state under specific operating conditions, the storage unit 4 and the on-off valve 47 are operated in an intermittent way in the kneading and injecting system 1 of this invention. The kneaded mixture output through the kneaded mixture outlet 26 of the kneader 2 is once stored in the storage chamber 40 of the storage unit 4 and intermittently fed into the injector 3 in synchronism with specific driving intervals of the hydraulic cylinder 35 and the hydraulic motor 37.

More particularly, the kneader 2 is first operated with the on-off valve 47 closed as shown in FIGS. 2 and 6 to introduce the kneaded mixture into the storage chamber 40. As a result, the storing piston 43 is caused to ascend due to an increase in the internal pressure of the storage chamber 40. The hydraulic cylinder 35 is actuated at the same time to withdraw the rotary shaft 3a to its backward position, creating the measuring space 30 at a forward end part of the casing 3b.

Subsequently, the on-off valve 47 is opened, the second hydraulic cylinder 44 is actuated to lower the storing piston 43 and the hydraulic motor 37 is activated to rotate the rotary shaft 3a at the same time as shown in FIGS. 1 and 5. As a result, the kneaded mixture once stored in the storage chamber 40 is forced downward by the descending storing piston 43. The kneaded mixture forced out of the storage chamber 40 and the same fed from the kneader 2 join into a single stream, which is then supplied onto the injecting screw 31 of the injector 3 through the resin passage 46.

The kneaded mixture delivered onto the injecting screw 31 is transferred toward a forward end of the injector 3 by the rotating rotary shaft 3a and is temporarily stored in the measuring space 30 at the forward end part of the casing 3b. As the internal pressure of the measuring space 30 increases at this time, the rotary shaft 3a is caused to move rearward.

When the measuring space 30 has bean filled with the kneaded mixture, the on-off valve 47 is closed and the hydraulic motor 37 is deactivated to stop the rotation of the rotary shaft 3a. The hydraulic cylinder 35 is actuated in this condition so that the injecting piston 36 is pushed forward, causing the rotary shaft 3a to move leftward as shown in FIG. 2. As a result, the kneaded mixture stored in the conical portion 32 is forced downstream by the measuring space 30 at the forward end of the rotary shaft 3a and injected into an external mold to produce a desired injection-molded product.

As shown in the foregoing discussion, the kneading and injecting system 1 for processing the composite resin employs a two-axis configuration including the rotary shafts 2a and 3a provided in the kneader 2 and the injector 3, respectively, and the kneader 2 and the injector 3 are joined together to work in association with each other. With this configuration, the kneading and injecting system 1 can be made compact as a whole. Since the rotary shaft 2a of the kneader 2 and the rotary shaft 3a of the injector 3 can be controlled separately, it is possible to select desired rotating speeds for the rotary shafts 2a and 3a independently of each other in accordance with properties of the functional powder and the synthetic resin and other operating conditions. This serves to significantly increase the degree of operational freedom and makes it possible to manufacture high-quality composite resin molded products.

The storage unit 4 provided between the kneader 2 and the injector 3 temporarily stores in its storage chamber 40 the kneaded mixture fed from the kneader 2 with the on-off valve 47 closed when the injector 3 is performing an injecting operation, while the on-off valve 47 is opened and a total amount of the kneaded mixture temporarily stored in the storage chamber 40 and the same fed from the kneader 2 is supplied to the injector 3 when feeding the kneaded mixture into the measuring space 30 in the injector 3. Therefore, the kneaded mixture within the kneader 2 does not undergo alternate changes between a fluidized state and a halted state unlike the conventional systems even though the kneader 2 is operated continuously. This makes it possible to maintain constant operating conditions, stabilize the properties of the kneaded mixture obtained from the kneader 2 and reduce variations in the quality of molded products produced by the injector 3. Accordingly, the kneading and injecting system 1 can manufacture products of uniform quality at all times.

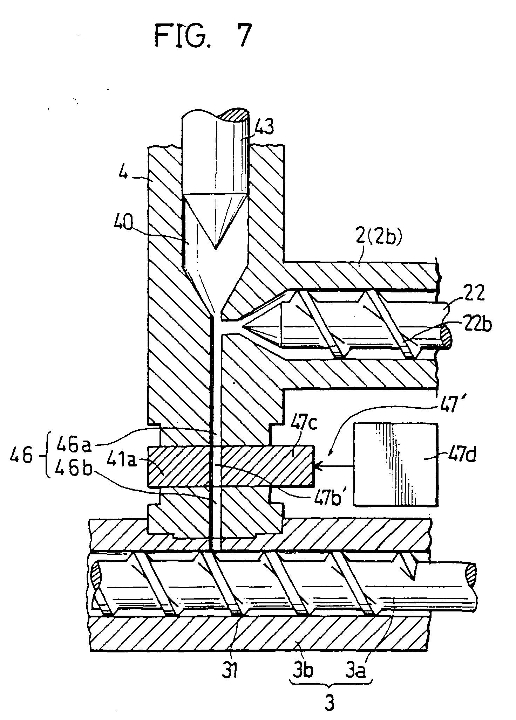

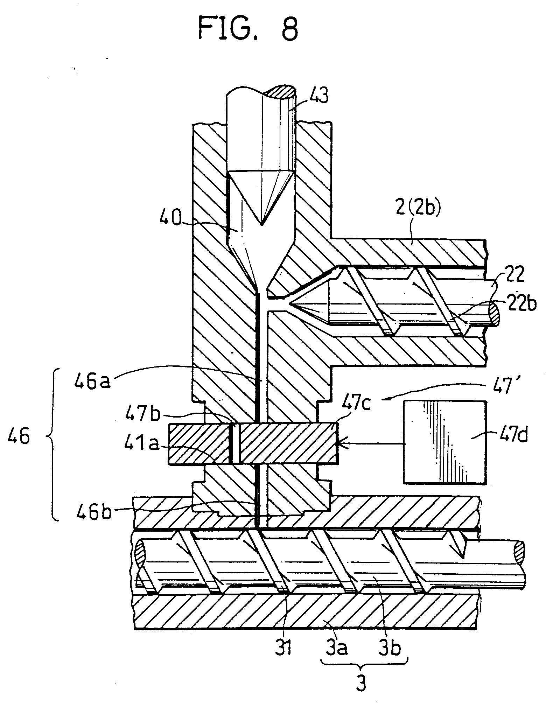

FIGS. 7 and 8 are sectional views of an on-off valve 47' according to another embodiment of the invention. Specifically, FIG. 7 shows a state in which the on-off valve 47' is in its open position while FIG. 8 shows a state in which the on-off valve 47' is in its closed position. As can be seen from these Figures, the on-off valve 47' of this embodiment comprises a laterally elongate linear motion valve element 47c and a valve element driver 47d for moving the linear motion valve element 47c back and forth.

Having a cylindrical or prismatic shape, the linear motion valve element 47c is slidably fitted into a valve element mounting hole 41a formed in the connecting tube 41 at right angles to the resin passage 46. A kneaded mixture passageway 47b' for connecting the upper channel 46a to the lower channel 46b is formed in the kneaded mixture passageway 47b'. When the linear motion valve element 47c is positioned such that the kneaded mixture passageway 47b' is aligned with both the upper channel 46a and the lower channel 46b, the kneaded mixture supplied from the upper channel 46a is transferred into the lower channel 46b. When the linear motion valve element 47c is positioned such that the kneaded mixture passageway 47b' is displaced from the upper channel 46a and the lower channel 46b as a result of linear motion of the linear motion valve element 47c , the feeding of the kneaded mixture is interrupted.

The valve element driver 47d of this embodiment is a hydraulic mechanism 47d. The linear motion valve element 47c is caused to move back and forth as the hydraulic mechanism 47d acts in forward and backward directions. As a result, the linear motion valve element 47c can be set either in a position where the kneaded mixture passageway 47b' is aligned with the resin passage 46 as shown in FIG. 7 or in a position where the linear motion valve element 47c blocks the resin passage 46 as shown in FIG. 8.

The mechanism for driving the linear motion valve element 47c need not necessarily be the hydraulic mechanism 47d but may be an electromagnetic mechanism including an electromagnet which moves the linear motion valve element 47c back and forth or a spiral shaft mechanism including a spiral shaft whose rotation about its own axis in forward and reversing directions causes the linear motion valve element 47c to move back and forth.

According to the on-off valve 47' of this embodiment, even when a small amount of the kneaded mixture has entered a narrow gap between an outer surface of the linear motion valve element 47c and an inner surface of the valve element mounting hole 41a, the kneaded mixture is fed from the gap as the linear motion valve element 47c moves back and forth during opening and closing operations of the on-off valve 47'. This will prevent loss of uniformity and degradation of the quality of the kneaded mixture which could potentially be caused by intrusion of the kneaded mixture from the narrow gap into the lower channel 46b.

As described above, a method of kneading and injecting a composite resin includes the steps of heating and kneading a mixture of a powder having functionality and a synthetic resin which serves as a binder by using a kneader, feeding the kneaded mixture in its hot and molten state obtained by the step of heating and kneading into an injector constructed separately from the kneader, and injecting the kneaded mixture into a desired mold from the injector. The kneaded mixture discharged from the kneader is temporarily stored while the injector is performing an injecting operation, and the kneaded mixture discharged from the kneader and the temporarily stored kneaded mixture are joined into a single stream when feeding the kneaded mixture into the injector.

In this method of kneading and injecting the composite resin, the kneaded mixture discharged from the kneader which is operated continuously while the injector is performing the injecting operation is temporarily stored, and when the kneaded mixture discharged from the kneader is supplied to the injector, the temporarily stored kneaded mixture is also fed into the injector. Thus, the mixture within the continuously operated kneader can be constantly advanced through the kneader regardless of the status of the injector. This makes it possible to maintain the amount of heat supplied to the kneaded mixture at a constant level and ensure consistent properties of the kneaded mixture, and eventually overcome the problem of the prior art related to variations in the quality of injection-molded products.

Also, a kneading and injecting system for making a composite resin molded product of a desired shape by injecting a kneaded mixture obtained by kneading a raw material prepared by adding a synthetic resin which serves as a binder to a powder having functionality includes a kneader for kneading the raw material, an injector for injecting the kneaded mixture fed from the kneader into a mold, and a storage unit for temporarily storing the kneaded mixture to be fed into the injector, the storage unit having a storage chamber for storing the kneaded mixture discharged from the kneader, a changeover device for switching the destination of the kneaded mixture discharged from the kneader between the storage chamber and the injector, and a feeder for feeding the kneaded mixture temporarily stored in the storage chamber into the injector through the changeover device.

In this kneading and injecting system, the kneaded mixture discharged from the kneader which is operated continuously while the injector is performing the injecting operation is temporarily stored in the storage chamber of the storage unit according to the setting of the changeover device, and when the kneaded mixture discharged from the kneader is supplied to the injector, the feeder feeds the temporarily stored kneaded mixture to the injector according to the setting of the changeover device. Thus, the mixture within the continuously operated kneader can be constantly advanced through the kneader regardless of the status of the injector. This makes it possible to maintain the amount of heat supplied to the kneaded mixture at a constant level and ensure consistent properties of the kneaded mixture, and eventually overcome the problem of the prior art related to variations in the quality of injection-molded products.

An outlet of the kneader and an input/output port of the storage unit are connected to each other by a connecting channel, a resin feeding passage connected to the injector branches out from the connecting channel, and the changeover device is formed of an on-off valve which is provided within the resin feeding passage.

In this construction, the kneaded mixture discharged from the kneader can be temporarily stored in the storage chamber of the storage unit and the temporarily stored kneaded mixture and the kneaded mixture discharged from the kneader can be joined into a single stream and fed into the injector only by providing the on-off valve in the resin feeding passage. This approach serves to simplify the structure of the changeover device as well as the control of switching operation.

The on-off valve is of a rotary type in which a cylindrical valve element is rotated about its own axis to open and close the connecting channel.

With this type of on-off valve, the feeding of the kneaded mixture to the injector is enabled and interrupted simply by rotating the valve element about its own axis in two opposite directions.

The on-off valve is of a linear motion type in which a valve element is moved in a direction intersecting the connecting channel to open and close the connecting channel.

With this type of on-off valve, the feeding of the kneaded mixture to the injector is enabled and interrupted simply by moving the valve element in forward and backward directions. In this construction, even when a small amount of the kneaded mixture has entered a narrow gap between an outer surface of the valve element and an inner surface of the resin feeding passage, the kneaded mixture is fed from the gap as the valve element moves back and forth. This will prevent degradation of the quality of the kneaded mixture which could be caused by backflow of the kneaded mixture from the narrow gap into the resin feeding passage.

The kneader includes a plurality of rotary disks arranged parallel to each other on a rotary shaft which has a screw formed on its curved outer surface as well as ring-shaped fixed disks arranged on a common axis with the rotary disks in such a way that the fixed disks fit on both sides of each successive rotary disk. Each of the rotary disks has alternately arranged ridges and grooves radially formed on both sides and each of the fixed disks also has alternately arranged ridges and grooves radially formed on both sides.

In this construction, the raw material fed into the kneader passes through gaps formed between the rotary disks and the fixed disks and is fully kneaded by compressing and shearing forces created by relative movements of the radially formed ridges and grooves of the rotary disks and those of the fixed disks.

Although the present invention has been fully described by way of example with reference to the accompanying drawings, it is to be understood that various changes and modifications will be apparent to those skilled in the art. Therefore, unless otherwise such changes and modifications depart from the scope of the present invention, they should be construed as being included therein.

## Claims

1. A method of kneading and injecting a composite resin, said method comprising the steps of:
heating and kneading a mixture of a powder having functionality and a synthetic resin which serves as a binder by using a kneader;
feeding kneaded mixture in a molten state into an injector; and injecting kneaded mixture into a specified mold from said injector;
wherein the kneaded mixture discharged from said kneader is temporarily stored while said injector is performing an injecting operation, and the kneaded mixture discharged from said kneader and the temporarily stored kneaded mixture are joined into a single stream when feeding the kneaded mixture into said injector.

2. A method according to claim 1, wherein said kneader (2) includes a plurality of rotary disks (21) arranged parallel to each other on a rotary shaft (2a) which has a screw (22) formed on its curved outer surface as well as ring-shaped fixed disks (21a) arranged on a common axis with said rotary disks (21) in such a way that said fixed disks (21a) fit on both sides of each successive rotary disk (21), each of said rotary disks (21) having alternately arranged ridges (24) and grooves (25) radially formed on both sides and each of said fixed disks (21a) having alternately arranged ridges (25') and grooves (24') radially formed on both sides.

3. A kneading and injecting system for making a composite resin molded product, comprising:
a kneader (2) for kneading the raw material including a powder having functionality and a synthetic resin serving as a binder;
an injector (3) for injecting kneaded mixture fed from said kneader (2) into a mold; and
a storage unit (4) for temporarily storing the kneaded mixture to be fed into said injector (3), said storage unit (4) including a storage chamber (40) for storing the kneaded mixture discharged from said kneader (2), a changeover device (47; 47') for switching the destination of the kneaded mixture discharged from said kneader (2) between said storage chamber (40) and said injector (3), and a feeder (43) for feeding the kneaded mixture temporarily stored in said storage chamber (40) into said injector (3).

4. A kneading and injecting system according to claim 3, wherein an outlet (26) of said kneader (2) and an input/output port of said storage unit (4) are connected to each other by a connecting channel (46a), a resin feeding passage (46b) connected to said injector (3) branches out from said connecting channel (46a), and said changeover device (47; 47') is formed of an on-off valve which is provided within said resin feeding passage (47b; 47b').

5. A kneading and injecting system according to claim 4, wherein said on-off valve (47; 47') is of a rotary type in which a cylindrical valve element (47a) is rotated about its own axis to open and close said connecting channel (46).

6. A kneading and injecting system according to claim 4, wherein said on-off valve (47; 47') is of a linear motion type in which a valve element (47) is moved in a direction intersecting said connecting channel (46) to open and close said connecting channel (46).

7. A kneading and injecting system according to claim 3, wherein said kneader (2) includes a plurality of rotary disks (21) arranged parallel to each other on a rotary shaft (2a) which has a screw (22) formed on its curved outer surface as well as ring-shaped fixed disks (21a) arranged on a common axis with said rotary disks (21) in such a way that said fixed disks (21a) fit on both sides of each successive rotary disk (21), and wherein each of said rotary disks (21) has alternately arranged ridges (24) and grooves (25) radially formed on both sides and each of said fixed disks (21a) also has alternately arranged ridges (25') and grooves (24') radially formed on both sides.
